# FASCICULE DE BREVET EUROPEEN

(11) **EP 3 189 998 B1**
(45) Date de publication et mention de la délivrance du brevet: **29.07.2020**
(21) Numéro de dépôt: 16205571.9
(22) Date de dépôt: 10.03.2016
(51) Int. Cl.: B60K 17/10, F16H 61/4139, B60K 17/354, B60K 17/356

(54) **DISPOSITIF HYDRAULIQUE COMPRENANT UN SÉLECTEUR BASSE PRESSION ET VÉHICULE INCORPORANT UN TEL DISPOSITIF**
HYDRAULISCHE VORRICHTUNG, DIE EINEN NIEDRIGDRUCK-WAHLSCHALTER UMFASST UND FAHRZEUG, DAS EINE SOLCHE VORRICHTUNG UMFASST
HYDRAULIC DEVICE COMPRISING A LOW-PRESSURE SELECTOR AND VEHICLE INCORPORATING SUCH A DEVICE

(30) Priorité: 13.03.2015 FR 1500495
(43) Date de publication de la demande: 12.07.2017
(62) Demande divisionnaire de: 16709423.4
(73) Titulaire: Poclain Hydraulics Industrie, 60410 Verberie (FR)
(72) Inventeur: BOZIC, Ante, 60410 VERBERIE (FR); CLAPIT, Bastien, 60410 VERBERIE (FR); LAMBEY, Julien, 60410 VERBERIE (FR)
(74) Mandataire: Regimbeau

(56) Documents cités:
- EP-A1- 0 059 485
- FR-A1- 2 996 176
- US-A- 4 244 184
- US-A1- 2005 097 887

## Description

### DOMAINE TECHNIQUE GENERAL

L'invention appartient au domaine des assistances hydrauliques sur véhicule et en particulier l'engagement et le désengagement de ces assistances.

Les assistances hydrauliques temporaires sont effectuées à l'aide de machines hydrauliques qui peuvent fournir du couple aux roues non motorisées mécaniquement. Ces machines transforment l'énergie hydraulique d'une huile sous pression en une énergie mécanique, ou inversement.

On définit deux phases d'utilisation : la phase d'assistance qui permet d'apporter un gain de motricité/couple et une phase de roue libre. Entre ces deux phases se trouvent deux phases transitoires permettant d'engager ou de dégager l'assistance hydraulique.

Pour activer de telles assistances, les circuits hydrauliques sont mis sous pression grâce à une pompe de gavage. Cette pression sert notamment à engager les moteurs.

### ETAT DE L'ART

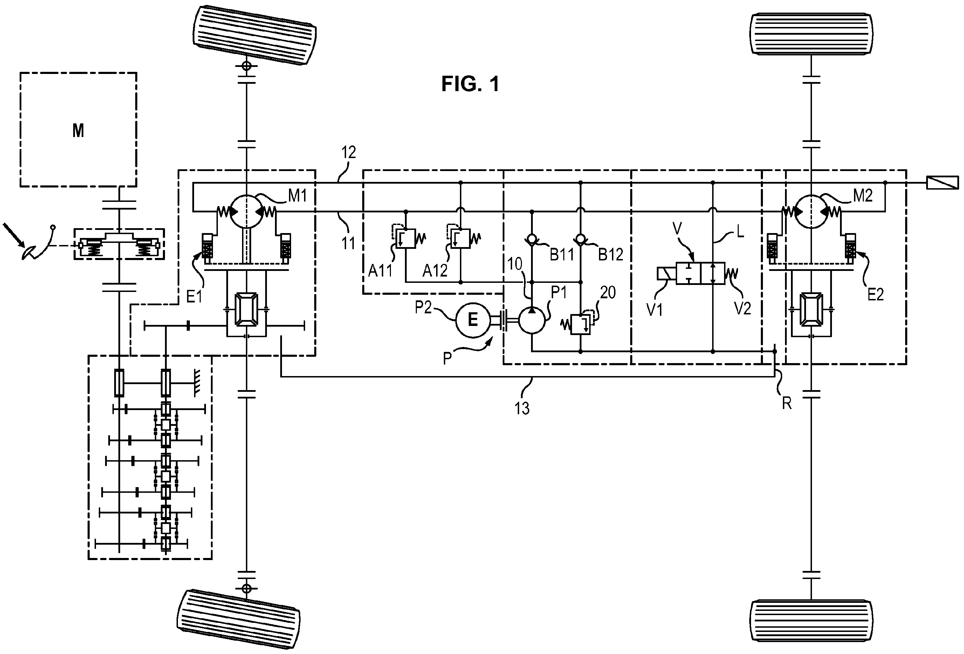

La **figure 1** détaille plus précisément un schéma hydraulique de l'art antérieur.

Sur un véhicule V, une première machine hydraulique M1 est montée sur l'essieu avant et une deuxième machine hydraulique M2 est montée sur l'essieu arrière. Par machines, on signifie qu'elles peuvent fonctionner en moteur ou en pompe.

La configuration présentée correspond à une « chaîne à vélo » (document FR 2 996 176), c'est-à-dire qu'en utilisation principale la première machine M1 fait office de pompe pour la deuxième machine M2 qui fait office de moteur.

A cette fin, le refoulement de la première machine M1 est relié à l'admission de la deuxième machine M2 par une ligne 11 dite haute pression et le refoulement de la deuxième machine M2 est relié à l'admission de la première machine M1 par une ligne 12 dite basse pression.
Les termes de haute et basse pression correspondent à une utilisation en marche avant avec apport de couple (« utilisation principale »).
Par conséquent, comme les pressions peuvent s'inverser, les termes de première ligne 11 et de deuxième ligne 12 seront préférés.

Une groupe électro-pompe P, avec notamment une pompe de gavage P1 et un moteur électrique P2, est prévu pour le gavage des lignes 11, 12.
A titre d'exemple, la pompe de gavage P1 peut aussi être alimentée par d'autres éléments, tel qu'un essieu ou un moteur thermique M.
Un limiteur de pression 20 est placé en dérivation de la pompe P1 pour la protéger d'éventuelles surpressions.

La pompe de gavage P1 alimente par une ligne de gavage 10 les première et deuxième lignes 11, 12, *via* deux clapets anti-retour B11, B12 qui empêche l'huile d'être refoulée vers la pompe P1 lorsque la pression de gavage est inférieure aux pressions d'utilisation.
L'huile provient d'une ligne de drainage 13 qui est relié à un ou plusieurs réservoirs R.
D'une façon classique, deux limiteurs de pression A11, A12 protègent les première et deuxième lignes 11, 12 des surpressions en déversant de l'huile dans la ligne de gavage 10.

Le circuit hydraulique présente aussi une valve de mise à vide V située sur une ligne de mise à vide L.

La ligne de mise à vide relie la première ou la deuxième ligne 11, 12 (on peut éventuellement mettre un sélecteur entre les lignes 11 et 12) à la ligne de drainage 13 qui conduit au réservoir R.

La valve V est une valve 2/2, comprenant une entrée et une sortie. L'entrée est reliée à la ligne 12 et la sortie à la ligne de drainage 13. La valve V possède un état passant et un état bloquant.
Le changement vers un état bloquant se fait à l'aide d'un tiroir solénoïde V1 qui est piloté électriquement. Ce changement d'état provoque une première phase transitoire en permettant l'activation effective de l'assistance hydraulique puisque les lignes haute et basse pression 11, 12 ne sont alors plus reliées au réservoir R et peuvent monter en pression. Cette montée en pression permet d'enclencher les coupleurs E1 et E2, qui lient les composants des machines hydrauliques M1 et M2 aux arbres de sortie des dites machines, de manière à les rendre actives sur le véhicule, c'est-à-dire d'engager le système. Ces coupleurs peuvent être du type embrayages à disques ou à crabot, par exemple du même type que l'état de l'art de boite de vitesse. Ils peuvent aussi représenter le couplage de moteurs à pistons radiaux qui se désengagent de leur came par rétractation des pistons.

Inversement, un ressort V2 maintient en position de repos la valve V en un état passant. Dès lors que le tiroir V1 n'est plus piloté, la valve V reprend une position passante et provoque une deuxième phase transitoire, dans laquelle la pression dans la ligne basse pression V2 chute, dégageant ainsi l'assistance hydraulique.

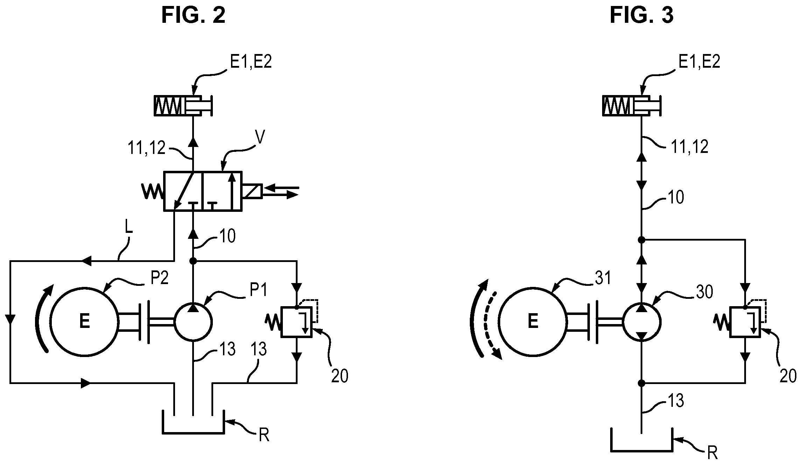

La **figure 2** représente une alternative simplifiée avec une valve V' qui en position de repos ouvre la ligne de mise à vide L et bloque la ligne de gavage 10 et inversement en position pilotée. Cette valve V' est elle aussi pilotée électriquement par un solénoïde.

Ainsi, pour ces deux étapes transitoires, il faut intervenir électroniquement sur plusieurs éléments, et notamment les valves V, V' et la pompe de gavage, ce qui impose des contraintes structurelles et de réseaux électriques.

### PRESENTATION DE L'INVENTION

Un des objectifs de l'invention est de simplifier les architectures actuellement existantes en améliorant les performances du dispositif. Pour cela, l'invention propose un dispositif tel que défini en revendication 1 annexée.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 représente un circuit hydraulique et notamment de gavage tel que l'art antérieur en connait,
- La figure 2 représente une schématisation de l'art antérieur,
- La figure 3 représente une schématisation de l'invention,
- La figure 4 représente un circuit d'un premier mode de réalisation de l'invention,
- La figure 5 représente un circuit d'un deuxième mode de réalisation de l'invention,
- La figure 6 représente une valve permettant la mise en œuvre du circuit de la figure 5,
- La figure 7 représente un circuit d'un autre mode de réalisation qui n'est pas compris dans l'invention,
- La figure 8 représente un autre mode de réalisation de la pompe de gavage,
- La figure 9 représente un autre mode de réalisation de la pompe de gavage, intégrée dans un autre mode de réalisation du circuit, qui n'est pas conforme à l'invention,
- La figure 10 représente un schéma d'une partie d'une machine hydraulique.

### DESCRIPTION DETAILLEE

A présent, plusieurs modes de réalisation vont être décrits.

Le dispositif comprend deux machines hydrauliques M1, M2 en fonctionnement de chaine à vélo, comme mentionné en introduction.
Ces machines M1, M2 sont reliées entre eux par une première ligne 11 et une seconde ligne 12 et alimentent les machines en huile.

Selon les modes de fonctionnement, le sens de circulation de l'huile et la pression dans ces lignes 11, 12 peuvent changer.
Par exemple, lorsque le véhicule équipé est en marche avant et en mode « apport de couple », la première machine M1 fait office de pompe et la deuxième machine M2 fait office de moteur. En considérant que la première ligne 11 relie le refoulement de la première machine M1 à l'admission de la deuxième machine M2 et que la deuxième ligne 12 relie le refoulement de la deuxième machine M2 à l'admission de la première machine M1, on aura dans ce cas une haute pression dans la première ligne 11 et une basse pression dans la deuxième ligne 12 et un sens de circulation de l'huile de la première machine M1 vers la deuxième M2 dans la ligne 11.
Par haute pression, on entend des pressions pouvant être supérieures à quelques centaines de bar, par exemple 400 bars et basse pression des pressions de quelques dizaines de Bar, par exemple 10 ou 30 Bar. La basse pression se différencie de la pression des réservoirs d'huile sans pression, par exemple représentés par les carters des machines M1 et M2, et le réservoir sans pression R, sensiblement reliés à la pression atmosphérique. La pression de basse pression différente de la pression atmosphérique est d'une manière connue nécessaire pour un bon fonctionnement d'une transmission en circuit fermé.

En fonctionnement, une transmission en boucle fermé présente une ligne HP et une ligne BP. Si aucun couple n'est produit par les machines, les deux lignes sont à la pression de BP, qui est une pression minimale pour le circuit fermé en fonctionnement.

En marche arrière, le sens de circulation de l'huile s'inverse et la haute pression se trouve alors dans la deuxième ligne 12 et la basse pression dans la première ligne 11.

Similairement, lorsque le véhicule est en « retenue », par exemple en descente, les pressions peuvent aussi changer selon les lignes 11, 12.

Ces machines M1, M2 sont embrayées, c'est-à-dire engagées, grâce à des coupleurs E1, E2 alimentés hydrauliquement par les première et deuxième lignes 11, 12. Les coupleurs représentés relient les blocs des machines hydrauliques aux arbres qui les traversent, et rendent les machines actives.

Un circuit de gavage est prévu pour alimenter les lignes 11, 12 en huile afin de permettre l'engagement des machines M1, M2 et aussi de compenser les fuites d'huile. Ce circuit permet de maintenir les lignes auxquelles il est raccordé à la pression minimale basse pression, dénommée pression de gavage. Les lignes 11 et 12 sont donc ainsi toujours au moins à la pression de gavage quand le système est activé. Pour cela, une pompe de gavage 30, qui sera appelée « pompe 30 » est prévue. Elle est reliée à réservoir R par une ligne de drainage 13 et peut alimenter les première et deuxième lignes 11, 12 *via* notamment une ligne de gavage 10.
La pompe de gavage 30 peut délivrer une huile sous une pression de quelques dizaines de bar, sensiblement équivalente à la basse pression.

La mise en pression des lignes HP et BP de la boucle fermée par le circuit de gavage, permet l'activation des machines hydrauliques M1 et M2, via l'actionnement des coupleurs B1 et E2. Inversement, la sortie d'huile de la boucle fermée, induit une baisse de pression dans les lignes, qui relâche les coupleurs E1 et E2 et libère les machines M1 et M2, ce qui les rend inactives.

La **figure 3** représente un schéma simplifiée de l'invention.

La pompe 30 est configurée pour pouvoir aspirer de l'huile depuis la ligne de gavage 10 et notamment la refouler vers le réservoir R via la ligne de drainage 13.

La mise à vide se fait ainsi par inversion du sens de fonctionnement de la pompe 31 et il n'y a plus besoin de valve de mise à vide ni de ligne spécifique de mise à vide.

Pour cela, les première et deuxième lignes 11, 12 ne comprennent plus chacune un clapet anti-retour autonome comme auparavant. En effet, l'aspiration dans la ligne de gavage 10 conduirait au verrouillage de ces clapets anti-retour, ce qui empêcherait l'huile de rejoindre la ligne de gavage 10.

Lorsque l'assistance hydraulique est requise, le dispositif fonctionne classiquement, avec une activation de la pompe 30 pour injecter de l'huile dans la ligne de gavage 10 qui va ensuite mettre sous pression les première et deuxième lignes 11, 12 et le cas échéant les coupleurs E1, E2 pour l'engagement des machines M1, M2.

En revanche, lorsque l'assistance hydraulique n'est plus requise, la pompe 30 inverse son sens de fonctionnement, c'est-à-dire qu'au lieu de prélever de l'huile dans le réservoir R pour l'injecter dans la ligne de gavage 10, elle prélève l'huile dans les première et/ou deuxième lignes 11, 12 *via* la ligne de gavage 10 et l'envoie vers le réservoir R. Ainsi, les première et deuxième lignes 11, 12 sont décompressées et le désengagement des machines M1, M2 est effectué grâce à l'aspiration par la pompe 30 du volume d'huile nécessaire.
Le désengagement est effectué rapidement grâce à l'aspiration de la pompe 30 qui est considéré comme plus efficace qu'une simple mise à vide par ouverture d'une valve de mise à vide.

Selon les architectures, seule la ligne correspondant à celle en basse pression en marche avant et en apport de couple, parmi les deux lignes 11, 12, est reliée à la ligne de gavage 10.
Plus précisément, la mise à vide produit des cavitations dans les cylindres des machines hydrauliques M1, M2. La décompression de la ligne de plus basse pression crée des volumes morts sous les pistons et du fait de la rotation des machines M1, M2, les espaces morts sont remplis par la ligne haute pression, ce qui permet la mise à vide de la ligne de plus haute pression aussi. Lorsque les machines M1 et M2 tournent, l'une d'elles va prélever de l'huile dans la ligne à plus haute pression, vers la ligne basse pression, ou elle sera aspirée via le clapet. La ligne basse pression étant vidée de par ailleurs, la pression va donc baisser dans les deux lignes en même temps. Ainsi, l'invention permet sur ce circuit particulier, de faire baisser la pression dans les deux lignes, même si une seule est reliée directement à la pompe. L'expression «reliée directement » doit être comprise comme signifiant « sans passer à travers une autre machine hydraulique » ou « raccordé par un clapet ouvert à la ligne allant en direction de la pompe de gavage ».
C'est un processus de cavitation volontaire, provoqué notamment par l'aspiration de la pompe 30, qui accélère la mise à vide.

On est ainsi passé d'une mise à vide passive (arrêt de commande de la pompe et de la valve de mise à vide) à une mise à vide active, tout en supprimant une valve (la valve de mise en vide) et supprimant matériellement une ligne (la ligne de mise à vide présente dans l'art antérieur).

Dans le cas présent, la pompe 30 est ici alimentée par un groupe électrique 31, formant un groupe électro-pompe GEP. Un limiteur de pression 20 est disposé en parallèle de la pompe 30, d'une façon classique.

Dans ce cas de l'électro-pompe 30, 31, l'inversion du sens de rotation du moteur électrique 31 fait fonctionner la pompe 30 en sens inverse. La vitesse, la durée d'activation sont fonction du volume d'huile à aspirer et des caractéristiques du dispositif, telles que la cylindrée.

Il est ainsi nécessaire de disposer d'un GEP 30, 31 pouvant fonctionner dans les deux sens de rotation.

L'utilisation d'un groupe électrique 31 n'est pas limitatif.

Plusieurs modes de réalisation sont possibles.

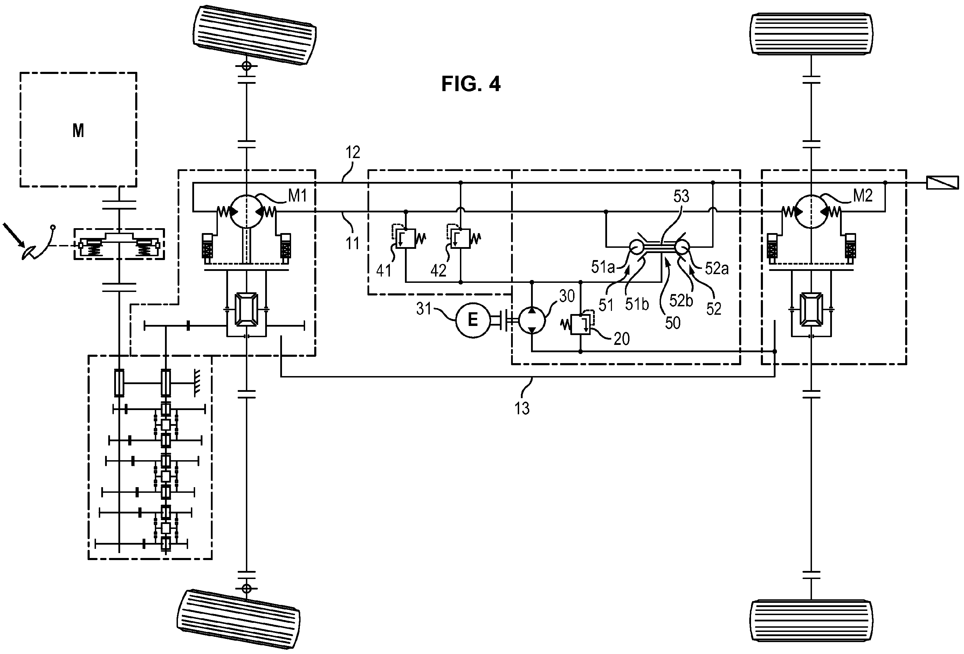

Comme représenté en **figure 4**, la ligne de gavage 10 est avantageusement relié aux première et deuxième lignes 11, 12 par un sélecteur basse pression 50 (en terminologie anglo-saxonne « *inverse shuttle valve* », soit « sélecteur de circuit inversé »). Cela permet de gaver la ligne qui a toujours la pression la plus basse (lorsque le véhicule est en marche arrière ou en retenue, les pressions dans les lignes 11, 12 peuvent s'inverser).

Le sélecteur 50 laisse ouvert en permanence la ligne de plus basse pression avec la ligne de gavage 10.

Dans cette configuration, on retrouve des limiteurs de pression 41, 42 en parallèle du sélecteur 50, qui protège les première et deuxième lignes 11, 12 de surpression éventuelle.

Le sélecteur basse pression 50 est typiquement constitué de deux clapets anti-retour 51, 52, dos-à-dos, comprenant chacun un élément d'étanchéité, par exemple une bille, ou un clapet de forme adaptée au débits et aux pressions du système, Un élément d'étanchéité, pour la suite nous considérerons par exemple et sans que cela ne soit limitatif, une bille, 51a, 52a pouvant être logée dans un siège 51a, 51b respectifs pour obturer le passage de l'huile.
Les billes 51a, 52a sont maintenues à une distance minimale l'une de l'autre par une tige rigide 53, de sorte qu'un des deux clapets 51, 52 est en permanence ouvert. Les billes 51a, 52a peuvent aussi être solidaires de la tige rigide 53.
Dès qu'une pression est supérieure d'un côté, la bille 51a, 52a se plaque contre le siège 51b, 52b et obture la communication entre la ligne 11, 12 et la ligne de gavage 10, libérant ainsi l'ouverture de l'autre côté entre l'autre ligne 12, 11 et la ligne de gavage 10.
Par exemple sur la **figure 4**, la pression est supérieure sur la deuxième ligne 12, ce qui provoque la fermeture du clapet 52 avec la bille 52a, ladite bille 52a provoquant grâce à la tige 53 l'ouverture du clapet 51, mettant ainsi la première ligne 11, de plus basse pression, avec la ligne de gavage 10.
Il existe une position intermédiaire où les trois lignes 10, 11, 12 sont ouvertes.

En outre, grâce à la tige 53 qui maintient un des deux clapets 51, 52 ouvert, il n'y a pas de risque d'obturation du sélecteur 50 lorsque la pompe 30 aspire dans la ligne de gavage 10 et crée une dépression.

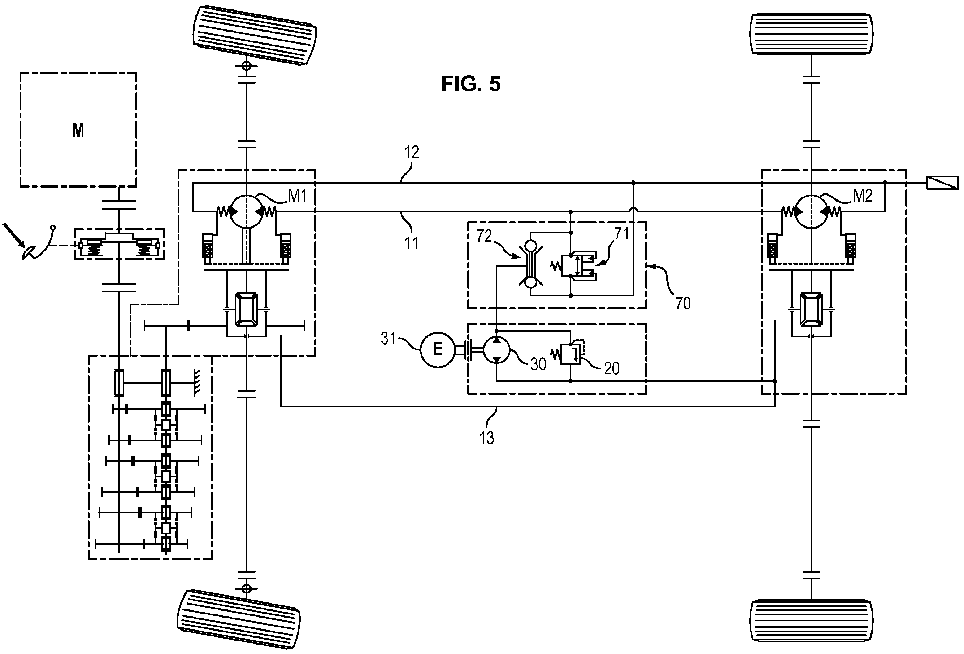

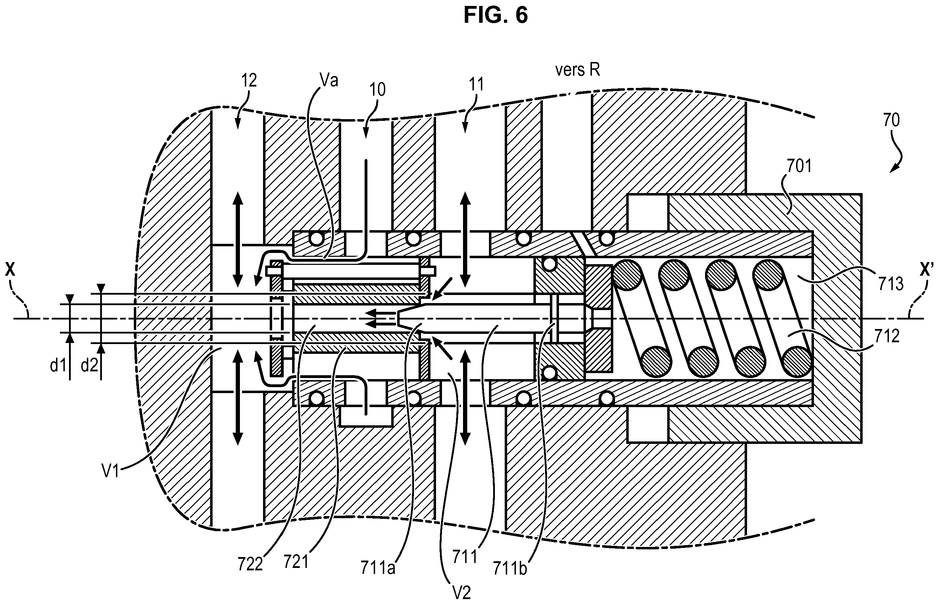

Les **figures 5** **et** **6** représentent une autre valve 70 comprenant à la fois un limiteur de pression 71 et un sélecteur basse pression 72. Dans cette valve 70, le limiteur 71 est un double limiteur situé entre les première et deuxième lignes 11, 12.
Une surpression dans une des deux lignes 11, 12 sera évacuée par déversement d'huile dans l'autre ligne 12, 11.

La valve 70 comprend une cartouche 701 dans lequel se trouvent un pion 711 et un poussoir 721. Ces deux derniers peuvent coulisser en translation relative selon un axe longitudinal X-X'.

Le poussoir 721 délimite le volume de la cartouche 701 en un premier volume V1 alimenté par la première ligne 11 et en un second volume V2 alimenté par la deuxième ligne 12. Les deux volumes V1, V2 ne sont pas complètement indépendants et peuvent communiquer fluidiquement entre eux par un canal interne 722 qui est compris dans le poussoir 721. En outre, le poussoir 721 définit avec la cartouche 701 un volume annulaire Va entre ledit poussoir 721 et la cartouche 701. Ce volume annulaire Va est toujours en communication avec la ligne de gavage 10 et est alternativement en communication avec le premier ou le second volume V1, V2. Ainsi, même lorsque la pompe de gavage 10 aspire, il n'y a pas de risque d'obturation.

Le pion 711 comprend une première extrémité 711a qui est adaptée pour obstruer le canal interne 722 dans une position de repos et pour l'ouvrir dans une position de travail. Ces deux positions s'obtiennent par une translation du pion 711 selon X-X'. Une deuxième extrémité 711b dudit pion 711 est au contact d'un ressort 712 qui maintient le pion 711 en position de repos.

Lorsque le canal interne 722 est obstrué, la position du poussoir 721 dépend des pressions s'exerçant dans les premier et deuxième volumes V1, V2 :
- Lorsque la pression dans le premier volume V1 est supérieure à celle du deuxième volume V2, le poussoir 721 met en communication la ligne de drainage 10 avec le deuxième volume V2 et donc la deuxième ligne 12,
- Lorsque la pression dans le deuxième volume V2 est supérieure à celle du volume V1, le poussoir 721 met en communication la ligne de drainage 10 avec le premier volume V1 et donc la première ligne 11.

Ainsi, le poussoir 721, lorsqu'il est obstrué, a la fonction de sélecteur basse pression 72.

Le pion 711 comprend en outre une première surface S1 débouchant dans le premier volume V1 sur laquelle s'exerce une force issue de la pression du premier volume V1. En pratique, cette première surface S1 correspondant à la surface obstruant le canal interne 722. Le pion comprend similairement une deuxième surface S2 débouchant dans le second volume V2 et sur laquelle s'exerce une force issue de la pression du second volume V2. En pratique, cette surface S2 est située entre le volume V2 et un logement 713 du ressort 712.

Les deux forces s'exercent dans le même sens et tendent à mettre le pion 711 en position de travail, c'est-à-dire à compresser le ressort 712 et à ouvrir le canal interne 722.

Ainsi, lorsque la somme de ces deux forces est supérieure à la force du ressort, le canal interne 722 s'ouvre et les deux volumes V1, V2 communiquent entre eux pour permettre à la surpression d'être évacuée d'une ligne 11, 12 vers l'autre 12, 11. Le pion 711 et le ressort 712 forment le limiteur de pression 71.
Il est possible d'obtenir des tarages différents entre le premier volume V1 et le deuxième volume V2, en choisissant des surface S1, S2 adaptées. En pratique, étant donné les pressions en jeu (par exemple 400 bars dans une ligne contre 30 bars dans l'autre), seul un des deux volumes V1, V2 exerce une force significative contre le ressort 713.

Cette valve 70 qui intègre un limiteur 71 qui agit avec un seul ressort 713 et qui intègre un sélecteur de basse pression 72 permet une meilleure compacité du dispositif.

Quel que soit le mode de réalisation, on obtient un dispositif dont l'engagement et le dégagement des machines M1, M2 est piloté uniquement par la pompe de gavage 30 et l'inversion de son sens de fonctionnement. Il n'est plus nécessaire de recourir à des valves pilotées électriquement.

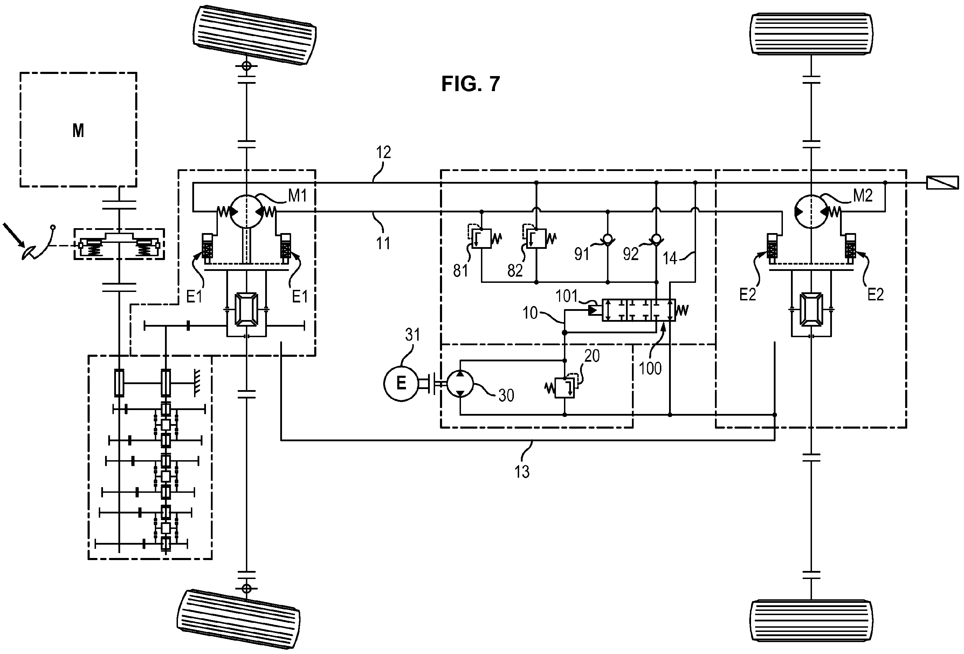

La **figure 7** représente un schéma hydraulique.

Dans cette variante, une valve de mise à vide 100 avec un tiroir 101 et une ligne de mise à vide 14 sont prévues.

La ligne de mise à vide 14 relie au moins une des deux première ou deuxième lignes 11, 12 au réservoir R, *via* par exemple la ligne de drainage 13.

Dans une position de repos, la valve de mise à vide 100 :
- ferme la ligne de gavage 10, ce qui signifie que les première et deuxième lignes 11, 12 ne peuvent être alimentées en huile par la pompe 30 ;
- ouvre la ligne de mise à vide 14, ce qui permet la mise à vide du dispositif.

Dans une position pilotée, la valve de mise à vide 100 :
- ouvre la ligne de gavage 10, ce qui permet l'alimentation en huile des première et deuxième lignes 11, 12,
- ferme la ligne de mise à vide 14.

La valve de mise à vide 100 comprend avantageusement une position intermédiaire de sécurité, étanche, dans laquelle les lignes de gavage 10 et de mise à vide 14 sont fermées.

Dans ce mode de réalisation, le tiroir 101 est piloté hydrauliquement par la ligne de gavage 10.

De cette façon, lorsque l'assistance hydraulique est requise, la pompe 30 est activée, ce qui va mettre la ligne de gavage 10 sous pression. Le tiroir 101 est alors piloté et la valve de mise à vide passe en position pilotée pour permettre le gavage des première et deuxième lignes 11, 12.

Inversement, lorsque l'assistance hydraulique n'est plus requise, la pompe 30 est activée en sens inverse, ce qui provoque l'aspiration de l'huile dans la ligne de gavage 10 et va accélérer la mise en position de repos de la valve de mise à vide 100. La décompression des première et deuxième lignes 11, 12 se fait ainsi rapidement et permet le désengagement des machines M1, M2.

On retrouve des limiteurs de pression 81, 82 et des clapets anti-retour 91, 92 (en sens passant de la ligne de gavage 10 vers les lignes 11, 12) positionnées en parallèle entre les première et deuxième lignes 11, 12 et la ligne de gavage 10 (lorsque la valve de mise à vide 100 est en position pilotée).

Selon les alternatives, la ligne de mise à vide 14 est reliée uniquement à la ligne correspondant à la basse pression en marche avant et en mode apport de couple.

Il est aussi possible de prévoir un sélecteur de basse pression qui sélectionne la ligne de plus basse pression entre la première et la deuxième ligne 11, 12 pour la relier à la ligne de mise à vide 14.

Il est aussi possible de relier les deux lignes 11, 12 à la ligne de mise à vide 14.

On obtient un dispositif dont l'engagement et le dégagement des machines M1, M2 est piloté uniquement par la pompe de gavage 30 et l'inversion de son sens de fonctionnement.

Quel que soit le mode de réalisation de l'invention, le désengagement des machines hydrauliques M1, M2 se fait grâce à la circulation en sens inverse du fonctionnement en gavage, du débit à travers la pompe, typiquement grâce à l'aspiration de la pompe de gavage 30. Cette circulation peut être passive ou active. Plusieurs types de pompes peuvent être utilisés.
Pour rappel, les figures précédentes représentaient une pompe 30 entrainé par un moteur électrique 31 pouvant tourner dans les deux sens, mais cela n'est nullement limitatif.

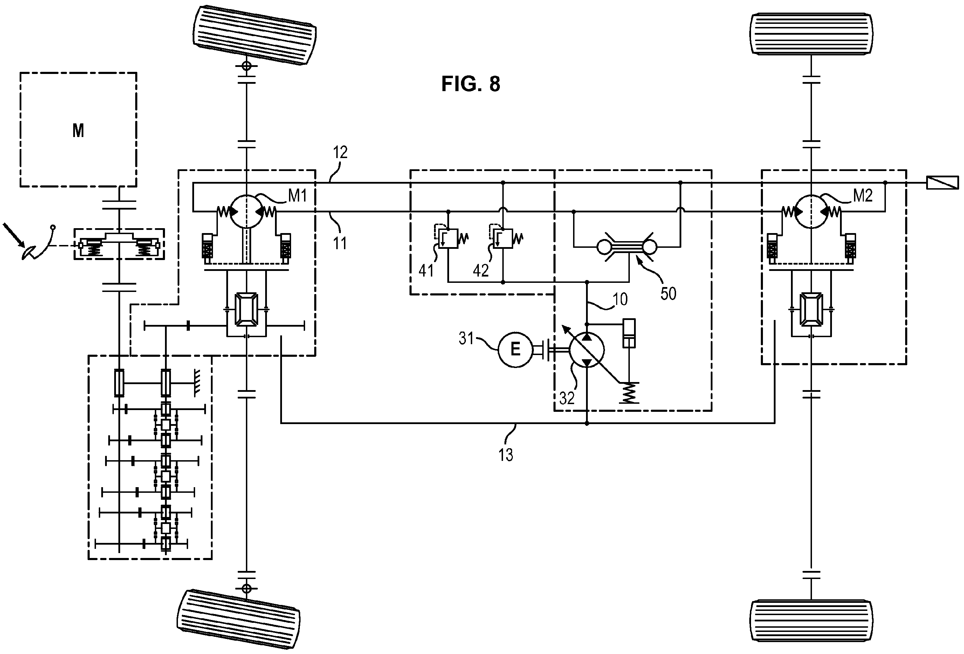

La **figure 8** représente un mode de réalisation dans lequel la pompe de gavage est une pompe à cylindrée variable 32. Il n'est plus forcément nécessaire d'avoir de limiteur de pression 20 en parallèle. Ce type de pompe connu réalise un asservissement de la cylindrée de la pompe vis-à-vis d'une consigne en pression, via une ligne de retro action et un ressort taré. Ce type de pompe équivaut à la juxtaposition d'une pompe a cylindrée fixe et d'un limiteur de pression.
La pompe à cylindrée variable 32 peut être appliquée à tous les modes de réalisation décrits précédemment.

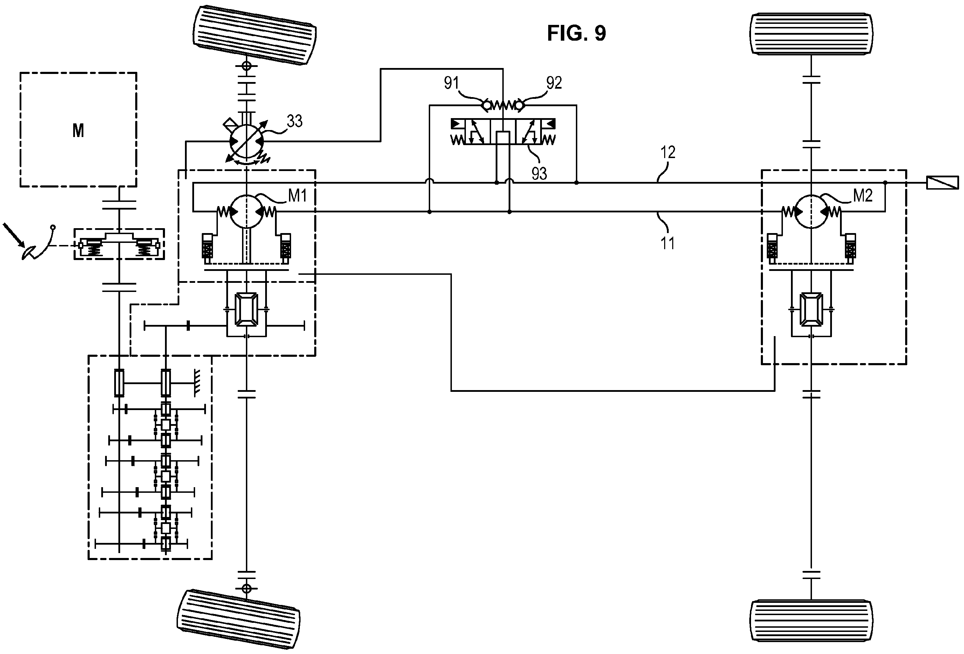

La **figure 9** représente une mode de réalisation dans lequel la pompe de gavage est une pompe à inversion de cylindrée 33. La pompe 33 tourne toujours dans le même sens mais le changement de cylindrée vers une cylindrée négative va provoquer l'aspiration.
Le principe général des modes de réalisation décrits reste le même.

En outre, la **figure 9** représente indépendamment de la pompe à in version de cylindrée 33 une architecture dans laquelle la pompe est entrainée par un essieu du véhicule (avec si besoin un réducteur et un coupleur, par exemple du type embrayage a disques).
Cette alternative concerne malgré tout principalement la pompe 33 puisqu'il faudrait sinon intégrer un inverseur de rotation entre l'essieu et la pompe pour pouvoir provoquer l'aspiration.

On retrouve sur **la** **figure 9** une fonction de limitation de la pression sur les deux lignes, par exemple sous forme des limiteurs de pression 91, 92 sous forme de clapets anti-retour pilotés ainsi qu'un sélecteur 93 tel que décrit auparavant.

La pompe peut aussi être entrainée en rotation par le moteur thermique M directement.

### Les machine hydrauliques M1, M2

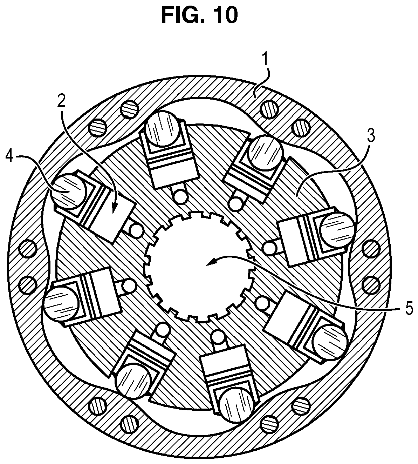

Les machines hydrauliques M1, M2 sont préférentiellement des machines à pistons radiaux, par exemple tel que schématisé sur la **figure 10****,** comprenant :
- une came lobée 1,
- une pluralité de piston 2 disposés radialement dans un bloc cylindres 3, les pistons 2 comprenant chacun un galet 4 pouvant rouler sur la came lobée 1,
- un arbre 5, pouvant être solidaire du bloc-cylindre lorsque notamment les coupleurs E1, E2 sont enclenchés.
Ces machines convertissent une énergie hydraulique en énergie mécanique grâce à la variation de cylindrée des pistons lorsqu'ils suivent la came lobée.
De telles machines M1, M2 possèdent des vitesses de rotation relativement faibles mais possèdent un couple élevé.
De telles machines M1 et M2 sont de préférence placées dans un véhicule de manière à tourner à la vitesse des roues qu'elles doivent entrainer, sans surmultiplication ou démultiplication. S'il y a une machine par essieu, cela s'entend à la vitesse moyenne des deux roues de l'essieu, via un différentiel ou un système équivalent.

Un carter (non représenté) protège l'ensemble. Le carter peut faire office de réservoir R. Le réservoir R est sensiblement à a la pression atmosphérique. Il peut y être raccordé via des reniflards, des filtres, ou des clapets, ce qui peut créer une très légère différence de pression par rapport à l'extérieur.

## Revendications

1. Dispositif comprenant :
- un premier appareil hydraulique (M1) et un deuxième appareil hydraulique (M2), les deux appareils hydrauliques (M1, M2) étant reliés par une première ligne (11) et une deuxième ligne (12) permettant l'admission ou le refoulement d'huile dans lesdits appareils hydrauliques (M1, M2),
- une pompe de gavage (30), disposée entre un réservoir (R) et une ligne de gavage (10), la ligne de gavage (10) étant en communication avec au moins une desdites première et deuxième lignes (11, 12) et pouvant permettre le gavage desdites première et deuxième lignes (11, 12) par la pompe de gavage (30),
**caractérisé en ce qu'**il comprend un sélecteur basse pression (50, 72) reliant la pompe de gavage (30) à la première ligne (11) et à la deuxième ligne (12), lequel sélecteur (50, 72) comprend deux clapets anti-retour (51, 52) dos-à-dos comprenant chacun un obturateur ou élément d'étanchéité (51a, 52a), et un siège (51b, 52b), les obturateurs ou éléments d'étanchéité étant séparés l'une de l'autre par une tige (53) empêchant que les deux clapets (51, 52) ne soient fermés en même temps.

2. Dispositif selon la revendication 1, dans lequel les obturateurs ou éléments d'étanchéité (51a, 52a) sont formés chacun d'une bille,

3. Dispositif selon l'une des revendications 1 ou 2, dans lequel le sélecteur (50, 72) est adapté pour sélectionner la ligne de plus basse pression entre les première et deuxième lignes (11 ,12),

4. Dispositif selon l'une des revendications 1 à 3, dans lequel des limiteurs de pression (41, 42, 71) sont disposés en parallèle du sélecteur (50, 72) entre la ligne de gavage (10) et les première et deuxième lignes (11, 12), de façon à protéger ces deux dernières (11, 12) de surpression.

5. Dispositif selon l'une des revendications 1 à 4, dans lequel le sélecteur basse pression est un sélecteur de circuit inversé laissant toujours la ligne (11, 12) de plus basse pression parmi les première et deuxième lignes (11, 12) en communication avec la ligne de gavage (10).

6. Dispositif selon l'une des revendications 1 à 5, dans lequel le sélecteur basse pression comprend un limiteur de pression en parallèle de chaque clapet anti-retour, le sélecteur et les clapets faisant partie d'une seule et même valve (60).

7. Dispositif selon l'une des revendications 1 à 6, dans lequel le sélecteur basse pression et les limiteurs de pression (71) sont formés par une seule valve (70), ladite valve comprenant une cartouche (701) dans lequel peut coulisser un poussoir (721) et un pion (711) selon l'axe longitudinal X-X' de la valve (70), dans lequel :
- le poussoir (721) sépare la cartouche (701) en un premier volume (V2) alimenté par la première ligne (11) et en un second volume (V1) alimenté par la deuxième ligne (12), les deux volumes (V1, V2) pouvant communiquer entre eux par un canal interne (722) compris dans le poussoir,
- le poussoir (721) définit un volume annulaire (Va) avec la cartouche (701), le volume annulaire (Va) communiquant alternativement avec le premier ou le second volume (V1, V2) selon la position en translation du poussoir (721) dans la cartouche (701) selon l'axe longitudinal (X-X'),
- le pion (711) comprend une première extrémité (711a) adaptée pour obstruer ledit canal (722) dans une position de repos, et une deuxième extrémité (711b) au contact d'un ressort (712) qui maintient le pion (711) en position de repos, le pion (711) étant mobile en translation selon l'axe longitudinal (X-X') pour ouvrir ou obturer le canal interne (722),
de sorte que lorsque le canal est obstrué, la position du poussoir (721) est fonction des forces issues des pressions du premier volume (V2) et du deuxième volume (V1) s'exerçant de part et d'autre du poussoir (721), et la ligne de gavage (10) est ainsi mise en communication avec la ligne (11, 12) qui a la plus basse pression parmi les première et deuxième lignes (11, 12),
- le pion (711) comprend une première surface (S1) débouchant dans le premier volume (V2) sur laquelle s'exerce une force issue de la pression du premier volume (V2), et une deuxième surface (S2) débouchant dans la second volume (V1) sur laquelle s'exerce une force issue de la pression du second volume (V1), les deux forces s'opposant toutes deux à la force du ressort (712),
de sorte que lorsque les deux forces sont supérieures à celle du ressort (712), le pion (711) subit une translation et ouvre ledit canal (722), mettant ainsi en communication les lignes haute et basse pression (11, 12).

8. Dispositif selon l'une des revendications précédentes, **caractérisé en ce qu'**il constitue un dispositif d'assistance à l'entrainement d'un véhicule.

9. Véhicule comprenant un dispositif conforme à l'une des revendications précédentes.

## Patentansprüche

1. Vorrichtung, die umfasst:
- eine erste hydraulische Einrichtung (M1) und eine zweite hydraulische Einrichtung (M2), wobei die zwei hydraulischen Einrichtungen (M1, M2) durch eine erste Leitung (11) und eine zweite Leitung (12) verbunden sind, die den Einlass oder den Auslass von Öl in die hydraulischen Einrichtungen (M1, M2) ermöglichen,
- eine Ladepumpe (30), die zwischen einem Behälter (R) und einer Ladeleitung (10) angeordnet ist, wobei die Ladeleitung (10) mit mindestens einer von der ersten und der zweiten Leitung (11, 12) in Verbindung steht und das Laden der ersten und der zweiten Leitung (11, 12) durch die Ladepumpe (30) ermöglichen kann,
**dadurch gekennzeichnet, dass** sie einen Niederdruck-Wahlschalter (50, 72) umfasst, der die Ladepumpe (30) mit der ersten Leitung (11) und mit der zweiten Leitung (12) verbindet, wobei der Wahlschalter (50, 72) zwei Rückschlagklappen (51, 52) Rücken an Rücken umfasst, die jeweils eine Verschlussvorrichtung oder ein Dichtungselement (51a, 52a), und einen Sitz (51b, 52b) umfassen, wobei die Verschlussvorrichtungen oder Dichtungselemente durch eine Spindel (53) voneinander getrennt sind, die verhindert, dass die zwei Klappen (51, 52) gleichzeitig geschlossen sind.

2. Vorrichtung nach Anspruch 1, wobei die Verschlussvorrichtungen oder Dichtungselemente (51a, 52a) jeweils von einer Kugel gebildet sind.

3. Vorrichtung nach einem der Ansprüche 1 oder 2, wobei der Wahlschalter (50, 72) geeignet ist, um die Leitung mit dem niedrigeren Druck unter der ersten und der zweiten Leitung (11, 12) auszuwählen.

4. Vorrichtung nach einem der Ansprüche 1 bis 3, wobei Druckbegrenzer (41, 42, 71) parallel zum Wahlschalter (50, 72) derart zwischen der Ladeleitung (10) und der ersten und der zweiten Leitung (11, 12) angeordnet sind, dass diese zwei letzteren (11, 12) vor Überdruck geschützt werden.

5. Vorrichtung nach einem der Ansprüche 1 bis 4, wobei der Niederdruck-Wahlschalter ein Kreislaufumkehr-Wahlschalter ist, der immer die Leitung (11, 12) mit dem niedrigeren Druck von der ersten und der zweiten Leitung (11, 12) mit der Ladeleitung (10) in Verbindung lässt.

6. Vorrichtung nach einem der Ansprüche 1 bis 5, wobei der Niederdruck-Wahlschalter einen Druckbegrenzer parallel zu jedem Rückschlagventil umfasst, wobei der Wahlschalter und die Klappen Teil ein und desselben Ventils (60) sind.

7. Vorrichtung nach einem der Ansprüche 1 bis 6, wobei der Niederdruck-Wahlschalter und die Druckbegrenzer (71) durch ein einziges Ventil (70) gebildet sind, wobei das Ventil einen Einsatz (701) umfasst, in dem sich ein Stößel (721) und ein Stift (711) entlang der Längsachse X-X' des Ventils (70) verschieben können, wobei:
- der Stößel (721) den Einsatz (701) in ein erstes Volumen (V2), das von der ersten Leitung (11) versorgt wird, und in ein zweites Volumen (V1) trennt, das von der zweiten Leitung (12) versorgt wird, wobei die zwei Volumina (V1, V2) durch einen Innenkanal (722), der in dem Stößel enthalten ist, miteinander verbunden sein können,
- der Stößel (721) ein ringförmiges Volumen (Va) mit dem Einsatz (701) definiert, wobei das ringförmige Volumen (Va) gemäß der translatorischen Position des Stößels (721) in dem Einsatz (701) entlang der Längsachse (X-X') abwechselnd mit dem ersten oder dem zweiten Volumen (V1, V2) verbunden ist,
- der Stift (711) ein erstes Ende (711a), das geeignet ist, um den Kanal (722) in einer Ruheposition zu verschließen, und ein zweites Ende (711b) im Kontakt mit einer Feder (712) umfasst, die den Stift (711) in der Ruheposition hält, wobei der Stift (711) entlang der Längsachse (X-X') translatorisch beweglich ist, um den Innenkanal (722) zu öffnen oder zu verschließen,
derart dass, wenn der Kanal verschlossen ist, die Position des Stößels (721) abhängig von den Kräften ist, die von den Drücken des ersten Volumens (V2) und des zweiten Volumens (V1) stammen, die auf beide Seiten des Stößels (721) ausgeübt werden, und die Ladeleitung (10) somit mit der Leitung (11, 12) in Verbindung gebracht wird, die unter der ersten und der zweiten Leitung (11, 12) den niedrigeren Druck aufweist,
- der Stift (711) eine erste Fläche (Sl), die in das erste Volumen (V2) mündet, auf die eine Kraft ausgeübt wird, die von dem Druck des ersten Volumens (V2) stammt, und eine zweite Fläche (S2) umfasst, die in das zweite Volumen (V1) mündet, auf die eine Kraft ausgeübt wird, die von dem Druck des zweiten Volumens (V1) stammt, wobei die zwei Kräfte alle beide der Kraft der Feder (712) entgegenwirken,
derart, dass, wenn die zwei Kräfte höher als diejenige der Feder (712) sind, der Stift (711) eine translatorische Bewegung erfährt und den Kanal (722) öffnet, wodurch die Hoch- und die Niederdruckleitung (11, 12) somit in Verbindung gesetzt werden.

8. Vorrichtung nach einem der vorhergehenden Ansprüche, **dadurch gekennzeichnet, dass** sie eine Vorrichtung zur Unterstützung des Antriebs eines Fahrzeugs bildet.

9. Fahrzeug, das eine Vorrichtung nach einem der vorhergehenden Ansprüche umfasst.

## Claims

1. A device comprising:
- a first hydraulic apparatus (M1) and a second hydraulic apparatus (M2), the two hydraulic apparatuses (M1, M2) being connected by a first line (11) and a second line (12) allowing the admission or the discharge of oil in said hydraulic apparatuses (M1, M2),
- a booster pump (30), disposed between a reservoir (R) and a booster line (10), the booster line (10) being in communication with at least one of said first and second lines (11, 12) and capable of boosting said first and second lines (11, 12) by the booster pump (30),
**characterized in that** it comprises a low-pressure selector (50, 72) connecting the booster pump (30) to the first line (11) and to the second line (12), which selector (50, 72) comprises two back-to-back check valves (51, 52) each comprising an obturator or sealing element (51a, 52a), and a seat (51b, 52b), the obturators or sealing elements being separated from each other by a rod (53) preventing the two valves (51, 52) from closing at the same time.

2. The device according to claim 1, wherein the obturators or sealing elements (51a, 52a) are each formed of a ball.

3. The device according to any of claims 1 or 2, wherein the selector (50, 72) is suitable for selecting the lowest-pressure line between the first and second lines (11, 12).

4. The device according to any of claims 1 to 3, wherein pressure relief valves (41, 42, 71) are disposed in parallel with the selector (50, 72) between the booster line (10) and the first and second lines (11, 12) so as to protect these last two lines (11, 12) from overpressure.

5. The device according to any of claims 1 to 4, wherein the low-pressure selector is an inverse shuttle valve always leaving the lowest-pressure line (11, 12) among the first and second lines (11, 12) in communication with the booster line (10).

6. The device according to any of claims 1 to 5, wherein the low-pressure selector comprises a pressure relief valve in parallel of each check valve, the selector and the valves forming part of one and the same valve (60).

7. The device according to any of claims 1 to 6, wherein the low-pressure selector and the pressure relief valves (71) are formed by a single valve (70), said valve comprising a cartridge (701) in which a pusher (721) and a pin (711) can slide along the longitudinal axis X-X' of the valve (70), in which:
- the pusher (721) separates the cartridge (701) into a first volume (V2) supplied by the first line (11) and into a second volume (V1) supplied by the second line (12), the two volumes (V1, V2) being able to communicate together by an inner channel (722) comprised in the pusher,
- the pusher (721) defines an annular volume (Va) with the cartridge (701), the annular volume (Va) communicating alternatively with the first or the second volume (V1, V2) depending on the translational position of the pusher (721) in the cartridge (701) along the longitudinal axis (X-X'),
- the pin (711) comprises a first end (711a) suitable for obstructing said channel (722) in a rest position, and a second end (711b) in contact with a spring (712) which holds the pin (711) in the rest position, the pin (711) being movable in translation along the longitudinal axis (X-X') to open or obturate the inner channel (722),
so that when the channel is obstructed, the position of the pusher (721) is a function of the forces derived from the pressures of the first volume (V2) and of the second volume (V1) exerted on either side of the pusher (721), and the booster line (10) is thus put in communication with the line (11, 12) which has the lowest pressure among the first and second lines (11, 12),
- the pin (711) comprises a first surface (S1) opening into the first volume (V2) on which a force derived from the pressure of the first volume (V2) is exerted, and a second surface (S2) opening into the second volume (V1) on which a force derived from the pressure of the second volume (V1) is exerted, the two forces both opposing the force of the spring (712),
so that when the two forces are greater than that of the spring (712), the pin (711) undergoes a translation and opens said channel (722), thus putting in communication the high and low pressure lines (11, 12) .

8. The device according to any of the preceding claims, **characterized in that** it constitutes a device for assisting the driving of a vehicle.

9. A vehicle comprising a device according to any of the preceding claims.
